# EUROPÄISCHE PATENTANMELDUNG

(11) **EP 4 349 178 A1**
(43) Veröffentlichungstag der Anmeldung: **10.04.2024**
(21) Anmeldenummer: 23173579.6
(22) Anmeldetag: 16.05.2023
(51) Int. Cl.: A23B 4/09, A23B 4/28, A22C 9/00

(54) **VORRICHTUNG UND VERFAHREN ZUM EINBRINGEN VON KOHLENDIOXIDSCHNEE IN FRISCHFLEISCH**

(30) Priorität: 07.10.2022 DE 102022125954
(71) Anmelder: Messer SE & Co. KGaA, 65812 Bad Soden (DE)
(72) Erfinder: Claeys, Jean-Claude, 2070 Zwijndrecht (BE)
(74) Vertreter: Münzel, Joachim R.

(57) **Zusammenfassung**

Eine Vorrichtung zum Einbringen von Kohlendioxidschnee in Frischfleisch ist mit wenigstens einer als doppelte Hohlnadel ausgebildeten Injektionsnadel ausgerüstet, durch deren Längserstreckung wenigstens zwei Kanäle geführt sind, von denen wenigstens ein Injektionskanal an eine Zuleitung für flüssiges Kohlendioxid und wenigstens ein Gasableitungskanal an eine Abgasleitung angeschlossen ist. Die Vorrichtung umfasst bevorzugt zudem eine Antriebseinrichtung, mittels der die Injektionsnadel in ein Fleischstück eingebracht wird. Nach dem Einbringen der Injektionsnadel wird flüssiges Kohlendioxid zugeführt, das innerhalb des Fleischstücks in ein Gemisch aus Kohlendioxidschnee und Kohledioxidgas übergeht. Während das Gas abgeführt wird, verbleibt zumindest ein Teil des Kohlendioxidschnees im Fleischstück und sorgt dort für eine effiziente Durchkühlung des umgebenden Gewebes.

## Beschreibung

Die Erfindung betrifft eine Vorrichtung zum Einbringen von Kohlendioxidschnee in Frischfleisch. Die Erfindung betrifft des Weiteren ein Verfahren zum Einbringen von Kohlendioxidschnee in Frischfleisch unter Einsatz einer entsprechenden Vorrichtung.

Die biochemischen Vorgänge sowie die strukturellen Veränderungen *post mortem* im Fleisch verschiedener Schlachttiere und die damit einhergehenden Änderungen in der Fleischqualität werden beispielsweise in dem Artikel von R. Binke: "Vom Muskel zum Fleisch", Mitteilungsblatt BAFF 42, Nr. 162, S. 347 (2003) beschrieben.

Durch die Anhäufung des Stoffwechselproduktes Laktat (Salz der Milchsäure) sinkt der Muskel-pH-Wert innerhalb weniger Stunden von pH 6,8 bis 7,2 auf pH 5,5. Man bezeichnet diesen Prozess auch als Säuerung. Die Geschwindigkeit dieses Prozesses und der abschließende pH-Wert sind von großer Bedeutung für den Reifungsprozess und die Lagerfähigkeit und somit für die Qualität des Fleisches. Da diese Vorgänge temperaturabhängig sind, hat auch der nach der Schlachtung erfolgende Kühlprozess einen entscheidenden Einfluss auf die Fleischqualität.

Hohe Temperaturen im Fleisch führen zu schnell ablaufenden biochemischen Reaktionen, die zu einer zu raschen Absenkung des pH-Werts auf Werte unter 5,6 und in der Folge zur Ausprägung von unerwünschtem "PSE-Fleisch" führen können. Andererseits ist eine zu rasche Kühlung des Schlachtkörpers auf Temperaturen von unter 10°C vor Eintritt der Totenstarre ebenfalls nachteilig, da sie die für eine gute Fleischqualität notwendige Säuerung des Fleisches hemmt und im Muskel eine Kälteverkürzung ("Cold Shortening") verursacht. Das entstehende "DFD - Fleisch" (beim Schwein) oder "DCB-Fleisch" (beim Rind) ist durch einen hohen pH-Wert von über 6,2 geprägt; es ist zäh und hat ein geringes Safthaltevermögen.

Darüber hinaus ist es insbesondere bei größeren Fleischstücken von Bedeutung, dass die Abkühlung homogen im gesamten Fleischvolumen erfolgt, da eine ungleiche Abkühlgeschwindigkeit zu ungleichen Reifungszuständen und somit ungleichen Fleischqualitäten innerhalb des Fleischstücks führt. Dies führt beispielsweise bei der Verarbeitung von Schinken dazu, dass das tief im Innern in unmittelbarer Nähe zum Knochen gelegene Fleisch häufig als minderwertiges Fleisch entfernt und vom weiteren Verarbeitungsprozess ausgeschlossen wird.

Als "Frischfleisch" soll im Folgenden Fleisch im Behandlungszeitraum zwischen der Schlachtung und der abgeschlossenen Fleischreifung bezeichnet werden. Die Fleischreifung umfasst eine Reihe biochemischer Reaktionen, die nach der Schlachtung im Muskelfleisch stattfinden. Verschiedene fleischeigene Enzyme bewirken diese Prozesse und fördern so die Genussfähigkeit von Fleisch. Der Reifungsprozess muss unter kontrollierten Bedingungen, insbesondere bei einer kontrollierten Temperatur und einem kontrollierten pH-Wert erfolgen.

Aus der EP 0 707 796 A1, der US 5 413 526 B1 sind Apparaturen bekannt, bei denen ein festes Kühlmittel, insbesondere Trockeneis, in ein Fleischstück injiziert werden kann. Die Apparaturen umfassen jeweils ein Schlitzmittel, mit dem in dem zu kühlenden Fleischstück eine Tasche gebildet wird, die anschließend mittels einer Zuführeinrichtung mit einem Trockeneisblock oder einer Vielzahl kleinerer Trockeneispellets aus festem Kohlendioxid gefüllt wird. Das allmählich sublimierende Trockeneis sorgt für eine Durchkühlung des Fleischgewebes. Nachteilig dabei ist, dass aufgrund der Zuführung einer vergleichsweise großen Menge an Kühlmittel in einzelne große Taschen eine sehr inhomogene Kühlung erfolgt, die wiederum zu einer inhomogenen Fleischqualität führt. Zudem können die Trockeneisteile nicht immer sicher in den eingeschnittenen Taschen gehalten werden, was in der Folge zu zusätzlichem Arbeitsaufwand und Verlust an Kühlmittel führt.

Demgegenüber weist der Gegenstand der EP 4 048 077 A1 eine Anordnung mit mehreren Injektionslanzen auf, mittels der gleichzeitig eine Mehrzahl voneinander beabstandeter Trockeneispellets in ein Fleischstück eingebracht werden kann. Dadurch wird ein vergleichsweise großes Volumen mit Trockeneispellets beaufschlagt, und lokale Unterkühlungen im Fleisch werden vermieden.

Ein Nachteil der bekannten Einrichtungen ist jedoch, dass die Injektion von Trockeneispellets in Fleisch einen hohen apparativen Aufwand erfordert und insbesondere die Beladung der Apparaturen mit den Pellets mit einer gewissen Störanfälligkeit behaftet ist.

Der Erfindung liegt daher die Aufgabe zu Grunde, eine Vorrichtung zum Kühlen von Frischfleisch unter Einsatz von festem Kohlendioxid zu schaffen, das die Nachteile des Standes der Technik überwindet und eine rasche und effiziente Durchkühlung des Fleisches ermöglicht.

Gelöst ist diese Aufgabe durch eine Vorrichtung mit den Merkmalen des Patentanspruchs 1 und durch ein Verfahren mit den Merkmalen des Patentanspruchs 8. Vorteilhafte Ausgestaltungen der Erfindung sind in den Unteransprüchen angegeben.

Erfindungsgemäß ist eine Vorrichtung zum Einbringen von Kohlendioxidschnee in Frischfleisch mit einer zum Einführen in ein Fleischstück bestimmten Injektionsnadel ausgerüstet, durch deren Längserstreckung wenigstens zwei Kanäle parallel oder koaxial zueinander geführt sind, die im Bereich eines distalen Endes der Injektionsnadel ausmünden. Von den wenigstens zwei Kanälen ist dabei ein erster Kanal, hier "Injektionskanal" genannt, an seiner vom distalen Ende der Injektionsnadel entgegengesetzten Öffnung, hier "Eintrittsöffnung" genannt, mit einer Zuleitung für flüssiges Kohlendioxid und ein zweiter Kanal, hier "Gasableitungskanal" genannt, an seiner vom distalen Ende der Injektionsnadel entgegengesetzten Öffnung, hier "Austrittsöffnung" genannt, mit einer Abgasleitung strömungsverbunden.

Bei der Injektionsnadel handelt es sich beispielsweise um eine nach Art einer Doppelkanüle aufgebaute Hohlnadel, deren Länge beispielsweise zwischen 10 cm und 50 cm und deren Durchmesser beispielsweise zwischen 5 mm und 15 mm beträgt. Der Injektionskanal weist bevorzugt einen Querschnitt zwischen 0,3 und 3 mm auf; der Querschnitt des Gasabzugskanals sollte größer als der des Injektionskanals sein und beträgt beispielsweise zwischen 0,5 und 10 mm.

Im Einsatz der erfindungsgemäßen Vorrichtung wird zunächst die Injektionsnadel mit ihrem distalen Ende in das zu kühlende Fleischstück, bei dem es sich beispielsweise um einen Schinken handelt, so tief eingebracht, dass die Öffnungen des Injektionskanals und des Gasabzugskanals vom Gewebe des Fleischstücks vollkommen bedeckt sind. Das Hineintreiben der Injektionsnadel in das Fleischstück erfolgt entweder manuell oder mittels einer Antriebseinheit, die beispielsweise pneumatisch oder elektrisch angetrieben wird. Beispielsweise wird dabei die Injektionsnadel 3 cm bis 10 cm tief in das Fleischstück hineingestochen. Dann wird flüssiges Kohlendioxid aus einer Kohlendioxidquelle, beispielsweise einem Tank, über die Zuleitung für flüssiges Kohlendioxid und den Injektionskanal mit einem Druck von beispielsweise 8 bar bis 20 bar in das Fleischstück eingetragen. Beim Austritt aus der distalen Mündungsöffnung des Injektionskanals entspannt das flüssige Kohlendioxid und geht unter starker Abkühlung in ein Gemisch aus Kohlendioxidschnee und Kohlendioxidgas über. Die starke Ausdehnung des Kohlendioxidgases führt im Innern des Fleischstücks zur Ausbildung einer Tasche, die sich rasch über die beiden distalen Mündungsöffnungen von Injektionskanal und Gasableitungskanal erstreckt und somit eine Strömungsverbindung zum Gasableitungskanal herstellt. Dadurch kann das Kohlendioxidgas über den Gasableitungskanal und die Abgasleitung abströmen, ohne dass das Gewebe des Fleischstücks überdehnt wird oder aufgrund des hohen Gasdrucks reißt. Der bei der Entspannung des flüssigen Kohlendioxids entstehende Kohlendioxidschnee verbleibt, sofern er nicht während der Injektion sublimiert und mit dem übrigen Kohlendioxidgas abgeführt wird, im Fleischstück und sorgt dort für eine gleichmäßige, jedoch nicht zu starke Durchkühlung. Dabei sublimiert der Kohlendioxidschnee allmählich und entweicht über den beim Eindringen der Injektionsnadel in das Fleischstück hervorgerufenen Stichkanal. Durch Einstellen der Zeitdauer, während der eine Injektion von flüssigem Kohlendioxid in das Fleischstück erfolgt, kann die Menge des erzeugten Kohlendioxidschnees entsprechend den jeweiligen Anforderungen eingestellt werden.

Um den von einem Bediener zu leistenden Kraftaufwand zu reduzieren, weist die erfindungsgemäße Vorrichtung zweckmäßigerweise eine Antriebs- und Positioniereinrichtung auf. Diese umfasst eine Aufnahmeeinheit, in der die Injektionsnadel axial begrenzt beweglich aufgenommen ist und eine Antriebseinheit, mittels der die Injektionsnadel in axialer Richtung aus einer Ruheposition in eine Arbeitsposition und zurück verfahrbar ist. Als Arbeitsposition soll dabei eine Position verstanden werden, in der die Injektionsnadel vorliegt, wenn zumindest ein vorderer (distaler) Abschnitt der Injektionsnadel in ein zu behandelndes Fleischstück eingebracht wurde und flüssiges Kohlendioxid injiziert werden kann; beispielsweise befindet sich die Injektionsnadel in ihrer Arbeitsposition mit ihrem distalen Ende 3 cm bis 10 cm unterhalb der Oberfläche eines zu behandelnden Fleischstücks. Die Antriebseinheit treibt die Injektionsnadel in das Fleischstück hinein und zieht sie nach Beenden des Injektionsvorgangs wieder in ihre vorherige Position, hier Ruheposition genannt, heraus. Zur Bewegung der Injektionsnadel kann die Antriebseinheit mechanische, pneumatische oder elektrische Antriebsmittel aufweisen, wie beispielsweise eine Feder, ein pneumatischer Stellantrieb oder ein Servomotor. Die Antriebseinheit kann so ausgebildet sein, dass sie die zum Einbringen erforderliche Energie vollständig aufbringt, oder so, dass sie die manuelle Betätigung eines Bedieners lediglich unterstützt. Die Positioniereinrichtung kann überdies Detektormittel aufweisen, mittels denen eine zur Injektion geeignete Position eines zu behandelnden Fleischstücks automatisch erfasst wird. Die Betätigung der Antriebseinheit kann anschließend ebenfalls automatisch ausgelöst werden oder erfolgt manuell durch einen Bediener.

Zweckmäßigerweise ist/sind die Zuleitung für flüssiges Kohlendioxid und/oder die Abgasleitung mit einem Ventil ausgerüstet. Das Ventil in der Zuleitung für flüssiges Kohlendioxid ermöglicht das Öffnen der Zuleitung für eine vorgegebene Zeitdauer, wodurch zugleich die Menge an zugeführtem flüssigen Kohlendioxid genau eingestellt werden kann. Die Betätigung des Ventils kann dabei manuell oder automatisiert erfolgen. Ein Ventil in der Abgasleitung verhindert das Eindringen von Umgebungsluft in der Zeit zwischen den Injektionen. Das Ventil bzw. die Ventile sind bevorzugt elektromagnetisch gesteuert und stehen mit einer beispielsweise elektronischen Steuereinheit in Datenverbindung; besonders bevorzugt befinden sowohl in der Zuleitung für flüssiges Kohlendioxid als auch in der Abgasleitung Ventile, die mittels der Steuereinheit koordiniert geöffnet und geschlossen werden können, um einerseits während einer Injektion ein zügiges Entweichen von Kohlendioxidgas zu ermöglichen, andererseits das Eindringen von Umgebungsluft in den Gasabzugskanal oder gar in das Fleischstück zu unterbinden.

Um das Kühlvolumen im zu behandelnden Fleischstück zu vergrößern, sieht eine vorteilhafte Ausgestaltung der Erfindung vor, dass eine Vorrichtung mehrere Injektionsnadeln, beispielsweise zwei, drei, vier oder mehr Injektionsnadeln, aufweist, mit denen gleichzeitig oder zeitversetzt zueinander flüssiges Kohlendioxid in ein Fleischstück injiziert werden kann. Die Injektionsnadeln sind dabei innerhalb eines Gehäuses axialbeweglich, jedoch radial beabstandet voneinander angeordnet und jeweils mit einem an die Zuleitung für flüssiges Kohlendioxid angeschlossenen Injektionskanal und einem an die Abgasleitung angeschlossenen Gasableitungskanal ausgerüstet. Bevorzugt sind die Injektionsnadeln dabei mit einer Antriebseinrichtung oder eine Mehrzahl an Antriebseinrichtungen wirkverbunden. Die Antriebseinrichtung oder die Antriebseinrichtungen werden dabei bevorzugt mittels einer Steuereinheit derart angesteuert, dass die Injektionsnadeln gleichzeitig oder nacheinander in das Fleischstück eingebracht werden.

Bevorzugt ist die Zuleitung für flüssiges Kohlendioxid mit einem Phasenseparator zum Abtrennen gasförmigen Kohlendioxids aus dem flüssigen Kohlendioxid ausgerüstet. Der Phasenseparator gewährleistet, dass ausschließlich, oder nahezu ausschließlich, flüssiges Kohlendioxid in den Injektionskanal und von dort in das Fleischstück gelangt. Dadurch ist eine genaue Bestimmung der Menge des durch die Injektion eingebrachten Kohlendioxidschnees möglich.

In einer abermals vorteilhaften Weiterbildung der Erfindung ist die Vorrichtung als Handgerät ausgebildet. Dazu kann die Vorrichtung einen Tragegriff aufweisen und/oder mit einem manuellen Auslösemechanismus zum Starten des Injektionsvorgangs und/oder zum Betätigen der Antriebseinheit ausgerüstet sein. Im Übrigen kann das Gehäuse der Vorrichtung auch mit Mitteln zum Befestigen einer Halteeinrichtung ausgerüstet sein, beispielsweise mit einer Tragöse zum Befestigen eines Seilzugs.

Die Aufgabe der Erfindung wird auch durch ein Verfahren mit den Merkmalen des Patentanspruchs 8 gelöst.

Ein erfindungsgemäßes Verfahren zum Einbringen von Kohlendioxidschnee in Frischfleisch unter Verwendung einer Vorrichtung nach einem der vorhergehenden Ansprüche ist dadurch gekennzeichnet, dass die mindestens eine Injektionsnadel in ein Fleischstück eingebracht wird, anschließend flüssiges, unter Druck stehendes Kohledioxid aus der Zuleitung für flüssiges Kohlendioxid über den Injektionskanal in das Fleischstück eingebracht wird, in dem es sich unter starker Abkühlung zu einem Gemisch aus Kohlendioxidschnee und Kohlendioxidgas entspannt, wobei der Kohlendioxidschnee zumindest teilweise im Fleischstück verbleibt und das entstehende Kohlendioxidgas über den Gasabzugskanal und die Abgasleitung abgeführt wird.

Zur Behandlung eines Fleischstücks, beispielsweise eines Schinkens, wird die erfindungsgemäße Vorrichtung derart vor das zu behandelnden Fleischstück platziert, dass die Injektionsnadel mit ihrem distalen Ende bzw. die Injektionsnadeln mit ihren distalen Enden auf das Fleischstück gerichtet sind. Sodann wird/werden die Injektionsnadel bzw. die Injektionsnadeln manuell oder mit Hilfe der Antriebseinheit in das Fleischstück hineingestochen. Sobald sich die Injektionsnadeln in ihrer Arbeitsposition befindet, d.h. mit ihrem distalen Ende eine vorgegebene Strecke von beispielsweise 5 cm bis 10 cm innerhalb des Fleischstücks, erfolgt für eine Zeitdauer von beispielsweise 0,5 s bis 3 s die Zufuhr von flüssigem Kohlendioxid über den Injektionskanal, bzw. die Injektionskanäle. Das flüssige Kohlendioxid entspannt beim Austritt aus dem Injektionskanal und geht unter starker Abkühlung teilweise in Kohlendioxidschnee und teilweise in Kohlendioxidgas über. Das stark expandierende Kohlendioxidgas führt zur Ausbildung einer Tasche im Gewebe um das distale Ende der bzw. einer jeden Injektionsnadel herum, die sich ausdehnt und schließlich auch die Eintrittsöffnung des Gasabzugskanals umschließt. Dadurch kann das Kohlendioxidgas über den Gasabzugskanal entweichen. Es wird anschließend über die Abgasleitung abgeführt. Der Kohlendioxidschnee dagegen verbleicht zumindest teilweise im Fleischstück, sublimiert allmählich unter Aufnahme von Wärme aus dem umgebenden Gewebe und führt so zu einer intensiven Durchkühlung des Gewebes. Abschließend wird die Injektionsnadel bzw. werden die Injektionsnadeln zurückgezogen, und die Vorrichtung steht für die nächste Injektion zur Verfügung.

Für die Kühlung von Frischfleisch mittels Kohlendioxidschnee ist es wesentlich, einen Gefrierbrand durch das zugeführte Kühlmedium zuverlässig zu vermeiden. Daher sollte die Dauer einer Injektion, also der Zeitraum, während dem flüssiges Kohlendioxid zugeführt wird, zwischen 0,5 s und 3 s betragen, wobei bei der Entspannung des flüssigen Kohlendioxids im Fleischstück eine Menge von 0,5 g bis 100 g Kohlendioxidschnee erzeugt wird. Die optimale Zeitdauer der Injektion ist spezifisch für Sorte und Größe des zu behandelnden Fleischstücks. Sie wird beispielsweise vor Beginn eines regulären Einsatzes der Vorrichtung mittels Versuchen empirisch festgestellt. Informationen über geeignete Injektionsdauern können auch in einem Arbeitsprogramm der Steuereinheit gespeichert vorliegen. Besitzt die eingesetzte Vorrichtung eine Mehrzahl an Injektionsnadeln, gelten die genannten Werte bevorzugt für jede der Nadeln.

Verfügt eine Vorrichtung über eine Mehrzahl von Injektionsnadeln, erweist es sich als zweckmäßig, dass die Zuführung des flüssigen Kohlendioxids in das Fleischstück über die einzelnen Injektionsnadeln alternierend erfolgt, um eine Beschädigung des Gewebes durch das expandierende Kohlendioxidgas zu vermeiden. "Alternierend" bedeutet, dass die Zufuhr des flüssigen Kohlendioxids über die Injektionsnadeln in einer zeitlichen Abfolge erfolgt. Dies kann beispielsweise dadurch sichergestellt werden, dass die Vorrichtung so ausgebildet ist, dass die Injektionsnadeln nacheinander in das Fleischstück eingebracht werden. Alternativ erfolgt das Einbringen der Injektionsnadeln gleichzeitig, jedoch werden die Ventile der jeweiligen Zuführungen für flüssiges Kohlendioxid mittels einer elektronischen Steuereinheit nacheinander oder wechselnd angesteuert.

Die erfindungsgemäße Vorrichtung und das erfindungsgemäße Verfahren eignen sich zur Kühlung verschiedener Fleischsorten, insbesondere von Rind- und Schweinefleisch. Eine besonders bevorzugte Anwendung ist die Behandlung von Schinken (Schweinekeule oder -schulter), bei dem sie insbesondere im Bereich eines Knochens eine gleichmäßige Kühlung im Umfeld des Knochens ermöglichen. In besonderer Weise eignen sie sich zur Behandlung von Frischfleisch unmittelbar nach der Schlachtung.

Durch die Erfindung gelingt es, insbesondere auch in einem großen, unzerteilten oder nicht entbeinten Fleischstück eine rasche Abkühlgeschwindigkeit im gesamten Fleischvolumen zu erzielen, wodurch eine gleichmäßig hohe Fleischqualität erzielt wird. Dabei kann beispielsweise eine gleichmäßige Abkühlung im gesamten Volumen des Fleischstücks um eine Temperaturdifferenz von 25 bis 40°C innerhalb eines Zeitraums von 30 min bis 120 min erzielt werden.

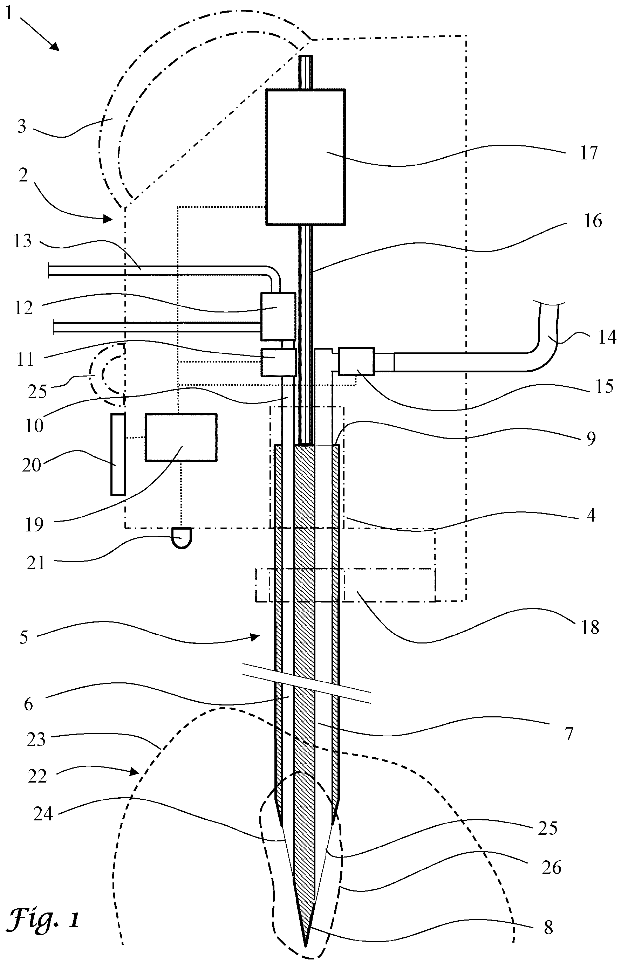

Anhand der Zeichnung soll ein Ausführungsbeispiel der Erfindung näher erläutert werden. Die einzig Zeichnung (Fig. 1) zeigt schematisch eine erfindungsgemäße Vorrichtung.

Die in Fig. 1 gezeigte, als Handgerät ausgebildete Vorrichtung 1 weist ein - hier durch eine strichpunktiere Linie nur angedeutetes - Gehäuse 2 mit Handgriff 3 auf. In einer Aufnahme 4 des Gehäuses 2 ist eine Injektionsnadel 5 axialbeweglich aufgenommen. Die Injektionsnadel 5, die beispielsweise einen Außendurchmesser zwischen 5 mm und 1 mm und eine Länge zwischen 100 und 300 mm aufweist, ist nach Art einer Doppelkanüle aufgebaut und weist in ihrem Innern zwei Kanäle 6, 7 auf, die parallel zueinander durch die gesamte Längserstreckung der Injektionsnadel 5 geführt sind. Beide Kanäle 6, 7 münden im Bereich eines zugespitzten distalen Endes 8 der Injektionsnadel 5 aus dieser aus.

Der Kanal 6, hier im Folgenden als Injektionskanal bezeichnet, steht an dem vom distalen Ende 8 entgegengesetzten proximalen Ende 9 der Injektionsnadel 5 mit einer Zuleitung 10 für flüssiges Kohlendioxid in Strömungsverbindung. Die druckfeste und zumindest abschnittsweise als flexible Schlauchleitung ausgebildete Zuleitung 10 ist in hier nicht gezeigter Weise an einer Quelle, beispielsweise einem Tank für flüssiges Kohlendioxid angeschlossen, in dem Kohlendioxid bei Umgebungstemperatur und einem Druck von beispielsweise zwischen 12 bar und 20 bar gelagert wird. In der Zuleitung 10 ist ein beispielsweise elektromagnetisches Ventil 11 zum Schließen und Öffnen der Zuleitung 10 sowie ein Gasphasenseparator 12 angeordnet, von dem aus eine Abgasleitung 13 abgeht.

Der Kanal 7, im Folgenden als Gasabzugskanal bezeichnet, steht am proximalen Ende 9 der Injektionsnadel 5 mit einer Abgasleitung 14 für gasförmiges Kohlendioxid in Strömungsverbindung, die gleichfalls zumindest abschnittsweise als flexible Schlauchleitung ausgeführt ist. Die Abgasleitungen 13, 14 dienen dazu, gasförmiges Kohlendioxid in hier nicht gezeigter Weise in die Umgebungsatmosphäre abzuleiten oder einer anderweitigen Verwendung zuzuführen. In der Abgasleitung 14 ist ein beispielsweise elektromagnetisches Ventil 15 angeordnet, mittels dessen die Abgasleitung 14 geöffnet oder gesperrt werden kann.

Von ihrem proximalen Ende 9 ausgehend ist die Injektionsnadel 5 über eine Antriebsstange 16 mit einer Antriebseinheit 17 verbunden. Die Antriebseinheit 17 umfasst beispielsweise einen Servomotor und ermöglicht, vermittelt durch die Antriebsstange 16 eine begrenzt axiale Bewegung der Injektionsnadel 5 um einen Betrag von beispielsweise 5 cm bis 10 cm. Zur Stabilisierung der Axialbewegung der Injektionsnadel 5 ist am Gehäuse 2 ein Führungselement 18 angeordnet.

Die Ventile 11, 15 sowie die Antriebseinheit 17 stehen mit einer elektronischen Steuereinheit 19 in Datenverbindung, mittels der die Ventile 10, 15 sowie die Antriebseinheit 17 nach einem vorgegebenen Programm angesteuert werden können. Ein mit der Steuereinheit 19 ebenfalls datenverbundenes Bedienpanel 20, das auf der Oberfläche des Gehäuses 2 angeordnet ist, ermöglicht darüber hinaus die manuelle Eingabe von Daten und/oder Steuerbefehlen durch einen Bediener. Weiterhin können Detektormittel, beispielsweise ein optischer Detektor 21 vorgesehen sein, die mit der Steuereinheit 19 in Datenverbindung stehen und mittels derer eine zur Injektion von Kohlendioxid geeignete Positionierung eines zu behandelnden Fleischstücks 22 gegenüber der Vorrichtung 1 festgestellt werden kann.

Im Einsatz der Vorrichtung 1 wird diese mit dem distalen Ende 8 der Injektionsnadel 5 auf der Oberfläche des zu behandelnden Fleischstücks 22, bei dem es sich beispielsweise um einen Schinken handelt, positioniert, wobei gegebenenfalls der Detektor 21 eine geeignete Stelle zur Positionierung der Injektionsnadel 5 auf dem Fleischstück 22 feststellt. Die Ventile 10, 15 sind zunächst geschlossen. Anschließend wird, durch manuellen Befehl oder programmgesteuert, die Antriebseinheit 17 ausgelöst und die Injektionsnadel 5 so tief in das Fleischstück 22 eingeführt, dass sich das distale Ende 8 der Injektionsnadel 5 um etwa 5 cm bis 10 cm unterhalb der Oberfläche 23 des Fleischstücks 22 befindet; zumindest aber so tief, dass die Kanäle 10, 15 mit ihren distalen Mündungsöffnungen 24, 25 vollständig vom Gewebe des Fleischstücks 22 umschlossen sind ("Arbeitsposition" der Injektionsnadel 5).

Anschließend werden, wiederum durch manuell eingegebenen Steuerbefehl oder programmgesteuert, die Ventile 11, 15 geöffnet. Dadurch strömt flüssiges Kohlendioxid mit einem Druck von beispielsweise 12 bar durch die Zuleitung 10 und den Injektionskanal 6. Eine etwaig im zugeführten flüssigen Kohlendioxidstrom enthaltene Gasphase wird mit Hilfe des Gasphasenseparators 12 entfernt. Das flüssige Kohlendioxid tritt an der Mündungsöffnung 24 aus dem Injektionskanal 6 aus und entspannt dort, wobei es unter starker Abkühlung in ein Gemisch aus Kohlendioxidgas und Kohlendioxidschnee übergeht. Durch die Expansion des Kohlendioxidgases bläht sich im Gewebe des Fleischstücks 22 rings um die Mündungsöffnung 24 eine mit Kohlendioxidgas gefüllte Tasche 26 auf, die schließlich auch die Mündungsöffnung 25 des Gasabzugskanals 7 umschließt. Dadurch kann das Kohlendioxidgas über den Gasabzugskanal 7 und die Abgasleitung 14 entweichen, ohne dass der starke Gasdruck zu einer nennenswerten Verletzung des Fleischgewebes führt. Eine maschinelle Absaugung des Kohlendioxidgases ist dabei nicht erforderlich, erfindungsgemäß jedoch auch nicht ausgeschlossen. Der bei der Entspannung des flüssigen Kohlendioxids gleichfalls entstehende Kohlendioxidschnee sublimiert teilweise im thermischen Kontakt mit dem Fleischgewebe und wird mit dem übrigen Kohlendioxidgas über den Gasabzugskanal 7 abgeführt; ein Teil des Kohlendioxidschnees verbleibt jedoch im Fleischstück 22 und sorgt dort für eine gleichmäßige Durchkühlung des Fleischgewebes.

Nach einer vorgegebenen Zeitdauer von beispielsweise 0,1 s bis 3 s, entsprechend einer im Fleischstück 22 erzeugten Menge von etwa 1 g bis 100 g Kohlendioxidschnee, wird das Ventil 11 geschlossen und die Zufuhr von flüssigem Kohlendioxid damit eingestellt. Gleichzeitig oder zeitversetzt dazu wird auch das Ventil 15 geschlossen, um nach dem Abzug des Kohlendioxidgases das Eindringen von Umgebungsluft in die Injektionsnadel 5 zu verhindern. Anschließend wird die Antriebseinheit 17 erneut betätigt und die Injektionsnadel 5 aus ihrer Arbeitsposition in ihre vorherige Position ("Ruheposition") zurückgezogen. Die Vorrichtung 1 steht nun für eine erneute Injektion zur Verfügung. Zur Erleichterung der Bedienung kann die Vorrichtung im Übrigen mit einer Tragöse 25 zum Befestigen eines Seilzuges o.ä. ausgestattet sein.

Es ist im Übrigen vorstellbar, in einem Gehäuse 2 eine Mehrzahl von Injektionsnadeln 5 vorzusehen (hier nicht gezeigt), die in gleicher Weise wie oben beschrieben arbeiten. Dadurch kann ein größeres Fleischvolumen gleichzeitig mit Kohlendioxidschnee behandelt werden. Um eine zu starke mechanische und/oder thermische Belastung des zu behandelnden Fleischstücks 22 zu vermeiden, ist es bei einer solchen Ausgestaltung vorteilhaft, entweder die Injektionsnadeln 5 nacheinander in das Fleischstück 22 einzubringen und/oder die Zufuhr des flüssigen Kohlendioxids alternierend über die Injektionsnadeln durchzuführen.

Mit der Vorrichtung 1 gelingt eine rasche und effiziente Durchkühlung eines zu behandelnden Fleischstücks 22. Sie kommt ohne eine mechanische Ladeeinrichtung für Kohlendioxidpartikel aus und ist daher wesentlich wartungsfreundlicher als aus dem Stand der Technik bekannte Apparate.

### Bezugszeichenliste:

- 1: Vorrichtung
- 2: Gehäuse
- 3: Handgriff
- 4: Aufnahme
- 5: Injektionsnadel
- 6: Injektionskanal
- 7: Gasabzugskanal
- 8: Distales Ende
- 9: Proximales Ende
- 10: Zuleitung für flüssiges Kohlendioxid
- 11: Ventil
- 12: Gasphasenseparator
- 13: Abgasleitung
- 14: Abgasleitung
- 15: Ventil
- 16: Antriebsstange
- 17: Antriebseinheit
- 18: Führungselement
- 19: Steuereinheit
- 20: Bedienpanel
- 21: Detektor
- 22: Fleischstück
- 23: Oberfläche
- 24: Mündungsöffnung
- 25: Mündungsöffnung
- 26: Tasche

## Patentansprüche

1. Vorrichtung zum Einbringen von Kohlendioxidschnee in Frischfleisch, mit einer zum Einführen in ein Fleischstück (22) bestimmten Injektionsnadel (5), durch deren Längserstreckung wenigstens zwei Kanäle (6, 7) parallel oder koaxial zueinander geführt sind, die im Bereich eines distalen Endes (8) der Injektionsnadel (5) ausmünden und von denen ein Injektionskanal (6) an seiner vom distalen Ende (8) der Injektionsnadel (5) entgegengesetzten Eintrittsöffnung mit einer Zuleitung (10) für flüssiges Kohlendioxid und ein Gasableitungskanal (7) an seiner vom distalen Ende (8) der Injektionsnadel (5) entgegengesetzten Austrittsöffnung mit einer Abgasleitung (14) strömungsverbunden ist.

2. Vorrichtung nach Anspruch 1, **gekennzeichnet durch** eine Antriebs- und Positioniereinrichtung, mit einer Aufnahmeeinheit (4), in der die Injektionsnadel (5) axial begrenzt beweglich aufgenommen ist und einer Antriebseinheit (17) zum axialen Bewegen der Injektionsnadel (5) aus einer Ruheposition in eine Arbeitsposition.

3. Vorrichtung nach Anspruch 1 oder 2, **dadurch gekennzeichnet, dass** in der Zuleitung (10) für flüssiges Kohlendioxid und/oder in der Abgasleitung (14) ein automatisch ansteuerbares Ventil (11, 15) angeordnet ist/sind.

4. Vorrichtung nach einem der vorhergehenden Ansprüche, **dadurch gekennzeichnet, dass** in einem Gehäuse (2) eine Mehrzahl von Injektionsnadeln (5) radial beabstandet voneinander angeordnet ist, die jeweils mit einem an die Zuleitung (10) für flüssiges Kohlendioxid angeschlossenen Injektionskanal (6) und einem an die Abgasleitung (14) angeschlossenen Gasableitungskanal (7) ausgerüstet sind.

5. Vorrichtung nach einem der vorhergehenden Ansprüche, **dadurch gekennzeichnet, dass** das Ventil (11) in der Zuführleitung (10) für flüssiges Kohlendioxid oder das Ventil (15) in der Abgasleitung (14) und/oder die Antriebseinheit (17) mit einer Steuereinheit (19) in Wirkverbindung stehen, mittels der die Zufuhr von flüssigem Kohlendioxid in das Fleischstück (22) nach einem vorgegebenen Programm regelbar ist.

6. Vorrichtung nach einem der vorhergehenden Ansprüche, **dadurch gekennzeichnet, dass** die Zuleitung (10) für flüssiges Kohlendioxid mit einem Phasenseparator (12) zum Abtrennen gasförmigen Kohlendioxids aus dem flüssigen Kohlendioxid ausgerüstet ist.

7. Vorrichtung nach einem der vorhergehenden Ansprüche, **gekennzeichnet durch** die Ausbildung als Handgerät.

8. Verfahren zum Einbringen von Kohlendioxidschnee in Frischfleisch unter Verwendung einer Vorrichtung (1) nach einem der vorhergehenden Ansprüche, **dadurch gekennzeichnet, dass** die mindestens eine Injektionsnadel (5) in ein Fleischstück (22) eingebracht wird, anschließend flüssiges, unter Druck stehendes Kohledioxid aus der Zuleitung (10) für flüssiges Kohlendioxid über den Injektionskanal (6) in das Fleischstück (22) eingebracht wird, in dem es sich in ein Gemisch aus Kohlendioxidschnee und Kohlendioxidgas entspannt, wobei der Kohlendioxidschnee zumindest teilweise im Fleischstück (22) verbleibt und das Kohlendioxidgas über den Gasabzugskanal (7) und die Abgasleitung (14) abgeführt wird.

9. Verfahren nach Anspruch 8, **dadurch gekennzeichnet, dass** die Zufuhr von flüssigem Kohlendioxid für einen Zeitraum zwischen 0,1 s und 3s erfolgt, wobei bei der Entspannung des flüssigen Kohlendioxids pro Injektionsnadel( 5) eine Menge zwischen 0,5 und 40g im Fleischstück (22) eingetragen wird.

10. Verfahren nach Anspruch 8 oder 9, **dadurch gekennzeichnet, dass** eine Mehrzahl von Injektionsnadeln (5) zum Einsatz kommt und die Zuführung des flüssigen Kohlendioxids in das Fleischstück (22) über die einzelnen Injektionsnadeln (5) alternierend erfolgt.
